# EUROPÄISCHE PATENTSCHRIFT

(11) **EP 2 899 391 B1**
(45) Veröffentlichungstag und Bekanntmachung des Hinweises auf die Patenterteilung: **08.03.2017**
(21) Anmeldenummer: 14152716.8
(22) Anmeldetag: 27.01.2014
(51) Int. Cl.: F02M 37/00, F02M 31/125, F02M 31/16, F02D 29/06

(54) **Vorrichtung zur Brennstoffversorgung einer Verbrennungsmaschine und Transportkältemaschine**
Device for supplying fuel to an internal combustion engine and transport cooling machine
Dispositif d'alimentation en carburant d'un moteur à combustion interne et machine frigorifique de transport

(43) Veröffentlichungstag der Anmeldung: 29.07.2015
(73) Patentinhaber: Schmitz Cargobull AG, 48341 Altenberge (DE)
(72) Erfinder: Dr. Flacke, Norbert, 45894 Gelsenkirchen (DE); Debbrecht, Jörg, 49124 Georgsmarienhütte (DE); Schanzmann, Martin, 46395 Bocholt (DE)
(74) Vertreter: Cohausz & Florack

(56) Entgegenhaltungen:
- DE-A1- 19 935 649
- DE-A1- 19 963 229
- DE-A1-102010 022 993
- US-A- 4 684 786
- US-A1- 2004 076 413

## Beschreibung

Die Erfindung betrifft eine Vorrichtung zur Brennstoffversorgung eines Verbrennungsmotors. Eine solche Vorrichtung umfasst üblicherweise einen Tank, der zur Aufnahme eines bei Raumtemperatur üblicherweise flüssigen Brennstoffs bestimmt ist, eine Zuführleitung, die zum Verbrennungsmotor führt und über die der Brennstoff zum Verbrennungsmotor geleitet wird, sowie eine Rückführleitung, über die überschüssiger Kraftstoff zurück zum Tank geführt wird.

Ebenso betrifft die Erfindung eine Transportkältemaschine, die mit einem Verbrennungsmotor und mit einer in der voranstehend angegebenen Weise ausgebildeten Vorrichtung zum Versorgen des Verbrennungsmotors mit Brennstoff ausgestattet ist. Bei einem Typ einer solchen Transportkältemaschine wird ein Generator von dem Verbrennungsmotor angetrieben. Der Generator treibt dann wiederum einen elektrischen Antriebsmotor an, mit dem ein Kompressor verkoppelt ist. Bei einem anderen Typ von Transportkältemaschine ist der Verbrennungsmotor rein mechanisch und direkt über einen Riementrieb mit dem Kompressor verkoppelt.

Verbrennungsmotoren der hier in Rede stehenden Art, bei denen es sich typischerweise um selbstzündende Motoren der Bauart "Diesel" handelt, wird stets mehr Brennstoff zugeführt, als für den Betrieb des Motors benötigt wird. Auf diese Weise wird sichergestellt, dass dem Motor bei jeder Leistung und Drehzahl stets genug Kraftstoff zur Verfügung steht und der Motor keine Luft sieht, wodurch der Betrieb des Motors gestört würde. Der jeweils überschüssige Brennstoffstrom wird über die Rückführleitung zurück zum Tank geführt.

Wird insbesondere Dieselkraftstoff bei niedrigen Temperaturen eingesetzt, so besteht die grundsätzliche Gefahr, dass wachsartige Paraffine ausflocken, die sich an den Innenflächen der vom Kraftstoff durchflossenen Leitungen und im Kraftstofffilter des Verbrennungsmotors niederschlagen und die Leitungen und den Kraftstofffilter verstopfen. Verstärkt wird die Gefahr eines "Einfrierens" speziell von Dieselkraftstoff dadurch, dass Diesel in einem hohen Maße hydroskopisch ist. Bei hohen Wassergehalten und niedrigen Temperaturen besteht dementsprechend die Gefahr, dass das Wasser gefriert und ebenfalls Leitungen und Filter im Versorgungssystem des Verbrennungsmotors verstopft.

Insgesamt wird somit bei niedrigen Temperaturen die Fließfähigkeit von Dieselkraftstoff und vergleichbaren anderen Brennstoffen so verschlechtert, dass eine zuverlässige Versorgung des Verbrennungsmotors ohne zusätzliche Maßnahmen nicht zuverlässig gewährleistet werden kann.

Als besonders kritisch erweist sich dies bei Maschinen, bei denen ein vergleichbar großer Abstand zwischen dem jeweils zu versorgenden Verbrennungsmotor und dem Tank besteht und bei denen zusätzlich die Versorgungsleitungen ungeschützt von einer Karosserie entlang eines Fahrzeugchassis oder desgleichen geführt sind. Eine solche Situation ergibt sich beispielsweise bei Transportkältemaschinen, die zum Kühlen von im Laderaum eines Nutzfahrzeugs verstautem Transportgut eingesetzt werden. Solche Transportkältemaschinen sind beispielsweise bei Sattelaufliegern, so genannten "Trailern", für Sattelzüge üblicherweise an der Stirnseite des den Laderaum umgrenzenden Nutzfahrzeugaufbaus montiert, wogegen der für die Brennstoffversorgung des Antriebsmotors vorgesehene Tank unter dem Laderaum am Chassis des Sattelaufliegers befestigt ist.

In der DE 20 2007 003 621 U1 ist ein beheizbares, für die Versorgung eines Verbrennungsmotors speziell geeignetes Rohrleitungssystem mit einer aus Metall oder Kunststoff bestehenden Brennstoffleitung zum Transport von flüssigen Brennstoffen hoher Viskosität, wie Dieselöl, Pflanzenöl oder flüssigem Pflanzenfett etc. vorgeschlagen worden. Das Rohrleitungssystem weist dabei eine die Brennstoffleitung erwärmende Heizleitung und eine aus Kunststoff bestehende Wärmedämmung auf, mit der die Brennstoffleitung und die Heizleitung umschäumt sind.

Beim diesem Heizleiter handelt es sich gemäß dem voranstehend erwähnten Stand der Technik um ein selbstlimitierendes Heizband. Derartige Heizbänder umfassen üblicherweise parallel geführte Kupferleitungen, zwischen denen ein temperaturabhängiges Widerstandselement angeordnet ist, welches die Wärmeabgabe eines über die Kupferleitungen mit elektrischer Energie gespeisten, sich über die Länge des Heizbands erstreckenden Halbleiterelements in Abhängigkeit von der Umgebungstemperatur begrenzt. Steigt die Umgebungstemperatur an, so erhöht sich der Widerstand und die Heizleistung sinkt. Sinkt die Temperatur, so verringert sich dagegen der Widerstand und die Heizleistung steigt. Bei handelsüblichen Heizbändern dieser Art ist üblicherweise das Heizleiterelement von einer Isolierung aus thermoplastischem Kunststoff umhüllt, der optional von einem schützenden Metallgewebe umgeben sein kann. Des Weiteren kann optional eine zusätzliche äußere Isolierung beispielsweise aus einem Thermoplasten oder einem Fluorpolymer vorgesehen sein, um das Heizband bei Kontakt mit aggressiven Medien zu schützen. Ein Beispiel für ein solches Heizband ist in der DE 10 2011 055 259 A1 beschrieben.

Eine andere Möglichkeit der Temperierung von Treibstoff in einem Tank für einen Verbrennungsmotor ist in der US 2004/0076413 A1 beschrieben. Bei dem dort vorgestellten Einspritzsystem wird die Einspritzpumpe über eine thermisch gegenüber der Umgebung isolierte Zuführleitung mit Treibstoff versorgt, die über ein kurz vor dem Grund des Tanks endendes Ansaugrohr gespeist wird. Das Ansaugrohr ist innerhalb des Tanks in einem ebenfalls kurz vor dem Boden des Tanks endenden Rücklaufrohr geführt, über das überschüssiger Treibstoff von dem Einspritzsystem zurück in den Tank geleitet wird. An das Rücklaufrohr ist eine Rücklaufleitung angeschlossen, die das Rücklaufrohr mit dem Einspritzsystem verbindet und ebenfalls gegenüber der Umgebung thermisch isoliert. Die Isolierung der Zuführ- und Rückführleitung kann dabei eine Einrichtung zum aktiven Beheizen der jeweiligen Leitung umfassen. Durch die koaxiale Führung des Ansaugrohrs in dem Rücklaufrohr kann die Wärme des zurücklaufenden, überschüssige Treibstoffs genutzt werden, um ein Ausflocken des aus dem Tank in das Ansaugrohr angesäugten Treibstoffs bei niedrigen Temperaturen zu vermeiden.

Vor dem Hintergrund des voranstehend erläuterten Standes der Technik bestand die Aufgabe der Erfindung darin, eine Vorrichtung zur Brennstoffversorgung zu schaffen, bei der unter optimierter Energieausnutzung mit einfachen Mitteln ein Einfrieren des Brennstoffs auch bei niedrigen Temperaturen sicher verhindert ist.

Darüber hinaus sollte eine Transportkältemaschine angegeben werden, bei der mit geringem Aufwand auch bei tiefen Temperaturen ein sicherer Dauerbetrieb gewährleistet ist.

Die Erfindung löst diese Aufgabe in Bezug auf die Vorrichtung durch eine gemäß Anspruch 1 ausgebildete Brennstoffversorgungsvorrichtung.

In Bezug auf die Transportkältemaschine besteht die Lösung der voranstehend genannten Aufgabe darin, dass eine solche Maschine neben einem für ihren Antrieb vorgesehenen Verbrennungsmotor und den weiteren von ihr üblicherweise umfassten Aggregaten eine erfindungsgemäße Vorrichtung umfasst, die den Verbrennungsmotor mit Brennstoff versorgt.

Eine erfindungsgemäße Vorrichtung zur Brennstoffversorgung eines Verbrennungsmotors umfasst demnach in Übereinstimmung mit dem eingangs erläuterten Stand der Technik einen Tank, der zur Aufnahme eines flüssigen Brennstoffs bestimmt ist, eine zum Verbrennungsmotor führende Zuführleitung, über die Brennstoff zum Verbrennungsmotor gelangt, und eine vom Verbrennungsmotor zurück zum Tank führende Rückführleitung, über die überschüssiger Brennstoff vom Verbrennungsmotor zurück zum Tank fließt. Erfindungsgemäß sind nun bei einer solchen Vorrichtung die Zuführleitung und die Rückführleitung zumindest abschnittsweise thermisch leitend miteinander verkoppelt.

Die Erfindung nutzt die Wärme, die der zum Tank in der Rückführleitung zurückfließende Brennstoff auf seinem Weg zum und entlang des Verbrennungsmotors aufgenommen hat, zum Erwärmen des Brennstoffs, der in der Zuführleitung zum Verbrennungsmotor strömt. Auf diese Weise wird der vergleichbar kleine Brennstoffvolumenstrom, der durch die Zuführleitung zum Motor gefördert wird, gezielt auf eine Temperatur gebracht, bei der er ausreichend fließfähig und die Gefahr der Entstehung von Ausflockung gemindert ist.

Erfindungsgemäß sind die Zuführ- und die Rückführleitung über den gesamten Weg zwischen Verbrennungsmotor und Tank so miteinander verkoppelt, dass über die gesamte Strecke ein Wärmeaustausch stattfinden kann. Dies kann beispielsweise dadurch bewerkstelligt werden, dass die die Kraftstoffströme führenden Leitungen aus einem wärmeleitfähigen Material gefertigt sind und über möglichst lange Abschnitte unmittelbar aneinander liegend geführt sind. Durch eine die Zuführ- und Rückführleitung zumindest abschnittsweise gemeinsam umhüllende Wärmeisolierung kann der Wärmeübergang zwischen den Leitungen zusätzlich unterstützt werden.

Ein besonders effektiver Wärmeaustausch zwischen der Zuführ- und der Rückführleitung findet dann statt, wenn die eine Leitung in der anderen geführt ist. Eine hohe Effektivität bei der Erwärmung des Brennstoffs in der Zuführleitung lässt sich dabei dadurch erreichen, dass die Zuführleitung zumindest über ein Teilstück ihrer Länge in der Rückführleitung geführt ist. In diesem Fall ist die Zuführleitung zumindest über einen Abschnitt ihres Weges zum Verbrennungsmotor vom erwärmten Kraftstoff in der Rückführleitung umhüllt, so dass über eine große Fläche von dem erwärmten zurückfließenden Brennstoff Wärme auf den durch die Zuführleitung fließenden kalten Brennstoff übertragen wird. Gleichzeitig schirmt die durch die Rückführleitung gebildete Umhüllung die in ihr verlaufende Zuführleitung gegenüber der kalten Umgebung ab. In Fällen, in denen beispielsweise der durch die Rückführleitung zurückströmende Volumenstrom zu klein ist, um die Zuführleitung in ausreichendem Maße zu umhüllen, kann es jedoch auch zweckmäßig sein, die Rückführleitung durch die Zuführleitung zu führen und die Abschirmung der Zuführleitung gegenüber der Umgebung durch eine ausreichende Wärmeisolierung mittels eines geeigneten Dämmmaterials zu bewerkstelligen. Denkbar ist es selbstverständlich auch, die Zuführleitung nur über einen begrenzten Abschnitt ihres Umfangs mit der Rückführleitung zu umhüllen, wenn dies unter strömungstechnischen oder baulichen Gesichtspunkten zweckmäßig ist.

Im Fall, dass von den Zuführ- und Rückführleitungen eine in der anderen geführt ist, ist es zweckmäßig, wenn die jeweils innenliegende koaxial zur sie umgebenden Leitung ausgerichtet ist, wenn also beispielsweise die Zuführleitung und die Rückführleitung über das Teilstück, über das die Zuführleitung in der Rückführleitung liegt, koaxial zueinander ausgerichtet sind.

Stellt sich heraus, dass der erfindungsgemäß zwischen dem zu- und rückströmenden Brennstoffstrom vorgesehene Wärmeaustausch nicht ausreicht, um die erforderliche Dauerbetriebssicherheit auch bei niedrigen Temperaturen zu gewährleisten, kann eine erfindungsgemäße Vorrichtung um eine Heizeinrichtung ergänzt werden, die den in der Zuführleitung strömenden Brennstoff erwärmt. Die üblicherweise elektrisch betriebene zusätzliche Heizeinrichtung ist dabei erfindungsgemäß an erster Stelle so eingerichtet, dass sie unmittelbar auf den in der Zuführleitung strömenden Brennstoff wirkt. Dementsprechend ist die Heizeinrichtung, sofern vorhanden, direkt in oder an mindestens einem Teilstück der Zuführleitung angeordnet. Gleichzeitig kann die Heizeinrichtung selbstverständlich auch zum Erwärmen der im Tank enthaltenen Brennstoffmenge genutzt werden.

Im Fall, dass eine elektrische Heizeinrichtung zum Erwärmen des in der Zuführleitung geförderten Brennstoffstroms vorgesehen ist, kann diese Heizeinrichtung ein Heizelement umfassen, das in oder entlang der Zuführleitung geführt ist. Als "Heizelement" werden hierbei nicht nur einfache bei Anlegen von elektrischer Energie sich erwärmende und ausreichend gegenüber dem Brennstoff isolierte elektrische Drähte verstanden, sondern auch so genannte selbstlimitierende handelsübliche "Heizbänder" der oben bereits erwähnten Art oder jedes andere draht- oder leitungsartige Heizelement, das in der Zuführleitung angeordnet werden kann und einerseits eine ausreichende Leistung zum Erwärmen des Brennstoffs liefert und andererseits ausreichend resistent gegen den jeweils zu erwärmenden Brennstoff ist.

Die erfindungsgemäß optional vorgesehene und dabei elektrisch betriebene Heizeinrichtung kann an eine zum Betrieb des Verbrennungsmotors vorgesehene Stromversorgung angeschlossen, insbesondere mit dessen Lichtmaschine, einem AC/DC-Wandler oder mit einem anderen von dem Verbrennungsmotor angetriebenen Generator verkoppelt sein. Um dabei auch bei sehr niedrigen Temperaturen zum Vorheizen bzw. "Auftauen" des in der Zuführleitung vorhandenen Brennstoffs ausreichend Energie zur Verfügung zu haben, kann es zweckmäßig sein die Heizeinrichtung mit einem Akkumulator zur Versorgung mit elektrischer Energie zu verkoppeln. Sobald der Verbrennungsmotor läuft, kann dieser Akkumulator in der üblichen Weise mit der von der Lichtmaschine oder einem anderen vom Verbrennungsmotor angetriebenen Generator gelieferten elektrischen Energie wieder aufgeladen werden. Dabei kann im Fall, dass der Verbrennungsmotor mittels eines elektrisch betriebenen Anlassers gestartet wird, der Akkumulator auch zur Unterstützung eines für diesen Zweck in üblicher Weise dem Verbrennungsmotor zugeordneten Akkumulators eingesetzt werden.

Besonders effektiv lässt sich eine erfindungsgemäß ausgebildete Vorrichtung bei einer Transportkältemaschine einsetzen, die von einem im stationären Betrieb eingesetzten Verbrennungsmotor angetrieben wird. Solche Maschinen sind in der Regel an der dem Fahrtwind ausgesetzten Stirnseite eines Nutzfahrzeugs befestigt und werden aus einem an der Unterseite des Chassis des Nutzfahrzeugs angeordneten Tank mit Brennstoff versorgt. Gerade bei einer solchen Anordnung erweist es sich als besonders vorteilhaft, die Zu- und Rückführleitung in erfindungsgemäßer Weise über den langen Weg zwischen Tank und Verbrennungsmotor ineinander zu führen, so dass ein intensiver Wärmeaustausch stattfindet. Ebenso lässt der bei Nutzfahrzeugen in der Regel zur Verfügung stehende Bauraum ohne Weiteres zu, auch vom Querschnitt her größere Leitungen zu verbauen, bei denen nicht nur die Zuführleitung in der Rückführleitung bzw. die Rückführleitung in der Zuführleitung geführt ist, sondern zudem ausreichend Platz für ein in oder an einer der Leitungen angeordnetes Heizelement zur Verfügung steht.

Aufgrund der engen räumlichen Verhältnisse, die demgegenüber in einer Transportkältemaschine gegeben sind, gibt es dort insbesondere in der Nähe des Verbrennungsmotors oder seiner Abgasanlage Bereiche, in denen gegenüber der Umgebung deutlich erhöhte Temperaturen herrschen. Indem die Rückführleitung gezielt durch diese Bereiche geführt wird, kann die Temperatur des rückgeführten Brennstoffstroms ebenso gezielt weiter erhöht werden und die durch den Betrieb der Maschine entstehende Abwärme besonders effektiv für die Erwärmung des zuströmenden Brennstoffs genutzt werden.

Bei dem mittels einer erfindungsgemäßen Vorrichtung an den jeweils von ihr versorgten Verbrennungsmotor gelieferten Brennstoff handelt es sich typischerweise um DieselKraftstoff, wie er in der Regel heute zum Betrieb von Nutzfahrzeugen oder stationär betriebenen Verbrennungskraftmaschinen verwendet wird. Jedoch eignet sich die Erfindung auch für andere fließfähige Brennstoffe, wie beispielsweise aus Pflanzen gewonnene Öle, die ebenfalls zum Betrieb von Verbrennungsmotoren dienen können und die bei niedrigeren Temperaturen ihre Eigenschaften, beispielsweise durch Entstehung von Ausflockungen, durch Zerfall oder durch Veränderung der Viskosität, so verändern, dass es zu einer Störung der ordnungsgemäßen Kraftstoffversorgung kommt.

Nachfolgend wird die Erfindung anhand einer ein Ausführungsbeispiel darstellenden Zeichnung näher erläutert. Es zeigen jeweils schematisch:
- Fig. 1: ein Nutzfahrzeug in einer seitlichen Ansicht;

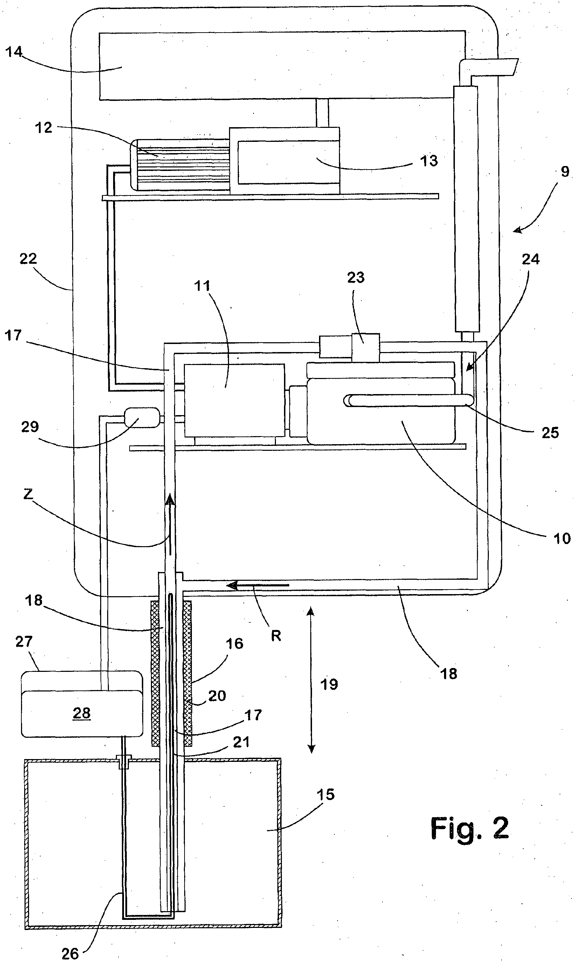

- Fig. 2: eine an dem Nutzfahrzeug montierte Transportkältemaschine in einer frontalen Ansicht.

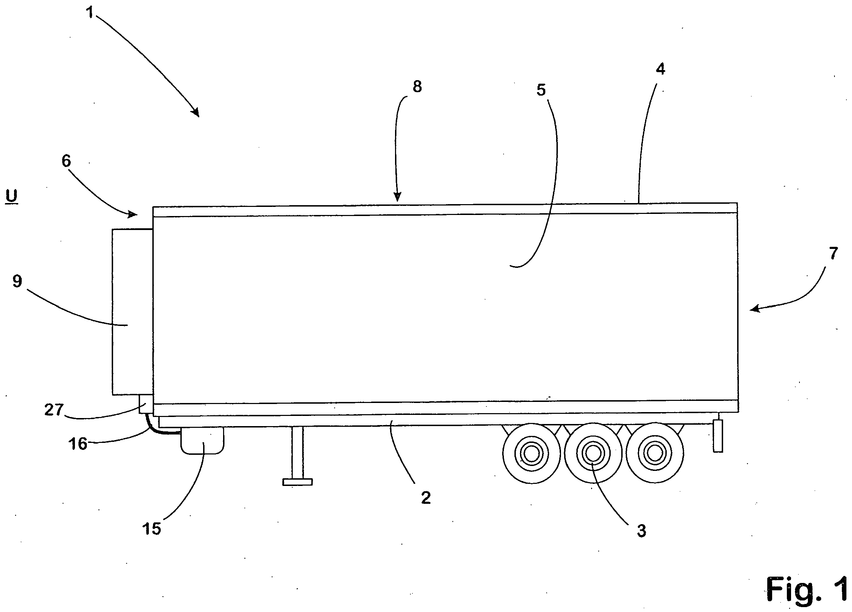

Bei dem in Fig. 1 gezeigten Nutzfahrzeug 1 handelt es sich um einen Sattelauflieger für einen hier nicht weiter dargestellten Sattelzug, bei dem der Sattelauflieger in an sich bekannter Weise von einer Zugmaschine gezogen wird.

Das in an sich bekannter Weise aufgebaute Nutzfahrzeug 1 umfasst ein Chassis 2, an dem die Räder 3 des Nutzfahrzeugs 1 gelagert sind. Das Chassis 2 trägt einen Kofferaufbau 4, der aus sich längs der jeweiligen Längsseite einer rechtwinklig langgestreckten, hier nicht sichtbaren Ladefläche erstreckenden Längswänden 5, einer Stirnwand 6, einer Rückwand 7 und einem Dach 8 besteht, die jeweils aus formsteifem, wärmedämmendem Paneelenmaterial bestehen. An der Rückwand 7 ist eine Flügeltür vorgesehen, die zum Beladen des von dem Kofferaufbau 4 umgebenen Laderaums mit Transportgut geöffnet werden kann.

An der der Zugmaschine des jeweiligen Sattelzugs zugeordneten Stirnwand 6 des Kofferaufbaus 4 ist eine Transportkältemaschine 9 befestigt, die ebenfalls in an sich bekannter Weise aufgebaut ist. Eine detaillierte Beschreibung der Einzelteile und der Funktion einer solchen Transportkältemaschine findet sich in der DE 10 2010 022 993 A1, deren Inhalt zum Zwecke der Erläuterung in die vorliegende Beschreibung einbezogen wird.

Die Transportkältemaschine 9 umfasst demnach einen Verbrennungsmotor 10 der einen Generator 11 antreibt. Der Generator 11 liefert elektrische Energie zum Antrieb eines elektrischen Antriebsmotors 12 der Transportkältemaschine 9, der wiederum einen Kompressor 13 antreibt. Der Kompressor 13 der Transportkältemaschine 9 verdichtet ein Kältemittel, das über einen Wärmetauscher 14 geleitet wird, indem einem mittels hier nicht gezeigter Gebläse im Umlauf aus und in den vom Kofferaufbau 4 umgebenen Laderaum geförderten Luftstrom Wärme entzogen wird, um die Temperatur im Laderaum auf einem bestimmten niedrigen Niveau zu halten. Genauso kann eine Transportkältemaschine 9 auch zum Erwärmen der im Laderaum enthaltenen Atmosphäre genutzt werden.

Der zum Betrieb des Verbrennungsmotors 10 benötigt Diesel-Brennstoff wird in einem Tank 15 bevorratet, der in einem vorderen, der Stirnwand 6 zugeordneten Bereich an der Unterseite des Chassis 2 befestigt ist. Über eine Verbindungsleitung 16 ist der Tank 15 mit dem Verbrennungsmotor 10 verbunden.

In der Verbindungsleitung 16 sind eine Zuführleitung 17 und eine Rückführleitung 18 für die Brennstoffversorgung des Verbrennungsmotors 10 miteinander kombiniert. So verläuft die Zuführleitung 17 über die zwischen dem Tank 15 und der Transportkältemaschine 9 zu überbrückende Strecke 19 in der Rückführleitung 18. Dabei sind Zuführleitung 17 und Rückführleitung 18 koaxial zueinander ausgerichtet. Durch eine die Rückführleitung 18 ummantelnde Isolierschicht 20 aus einem wärmeisolierenden Material ist die Verbindungsleitung 16 zusätzlich gegenüber der Umgebung abgeschirmt. Die Zuführleitung 17 besteht aus einem gut wärmeleitenden Material, wie beispielsweise einem Kupferwerkstoff.

In die Zuführleitung 17 eingeschoben ist ein Heizelement 21, das in der oben bereits beschriebenen, aus dem Stand der Technik an sich bekannten Weise als handelsübliches selbstlimitierendes Heizband ausgebildet ist. Das Heizelement 21 erstreckt sich zumindest über den freien Streckenabschnitt 19, den die Verbindungsleitung 16 zwischen dem Tank 15 und der Transportkältemaschine 9 überbrückt.

Nach Eintritt in das Gehäuse 22 der Transportkältemaschine 9 verzweigt sich die Verbindungsleitung 16 in die separat zum Einlass der Einspritzpumpe 23 des Verbrennungsmotors 10 führende Zuführleitung 17 und die ebenso separat vom hier weiter nicht gezeigten Einspritzsystem des Verbrennungsmotors 10 zurück zum Tank 15 führende Rückführleitung 18.

Über die Rückführleitung wird der über die Zuführleitung 17 der Einspritzpumpe 23 zugeführte, jedoch für den Betrieb des Verbrennungsmotors 10 nicht benötigte Brennstoffvolumenstrom wieder in den Tank geleitet. Dabei ist die Rückführleitung 18 gezielt durch einen Bereich 24 der Transportkältemaschine 9 geführt, in dem aufgrund der dort ebenfalls verlaufenden Abgasanlage 25 des Verbrennungsmotors 10 eine gegenüber der freien Umgebung U der Transportkältemaschine 9 deutlich erhöhte Temperatur herrscht. Dementsprechend steigt auch die Temperatur des zum Tank zurückströmenden Brennstoffstroms R gegenüber dem zur Einspritzpumpe 23 strömenden Brennstoffstrom Z deutlich an.

In der Verbindungsleitung 16 umströmt der so erwärmte, in der Rückführleitung 18 fließende Brennstoffstrom R den kälter in die Zuführleitung 17 einströmenden Brennstoffstrom Z, so dass es zum Wärmeaustausch kommt, im Zuge dessen die Temperatur des Brennstoffstroms Z steigt. Unterstützt wird die Erwärmung des Bennstoffstroms Z in der Zuführleitung 17 erforderlichenfalls durch das Heizelement 21, das bedarfsweise eingeschaltet wird bzw. aufgrund seiner selbstlimitierenden Funktion die abgegebene Wärmeleistung steigert, wenn die Temperatur des Brennstoffstroms Z unter eine bestimmte Grenztemperatur fällt, bei der die Gefahr der Entstehung von Ausflockungen oder des Einfrierens des Brennstoffs besteht.

Das Heizelement 21 ist von der Mündung der Verbindungsleitung 16 im Tank 15 in einer weitläufigen Heizschlange 26 durch den Tank 15 geführt und über einen Auslass an eine Steuereinrichtung 27 angeschlossen, so dass erforderlichenfalls auch das im Tank enthaltene Brennstoffvolumen durch das Heizelement 21 beheizt wird.

Die Steuereinrichtung 27 umfasst einen elektrischen Akkumulator 28, über den die elektrische Versorgung des Heizelements 21 erfolgt. Der Akkumulator 28 ist über ein Ladegerät 29 an den elektrischen Ausgang des Generators 11 angeschlossen und wird bedarfsweise über das Ladegerät 29 aufgeladen. Sofern hierzu Bedarf besteht, kann die im Akkumulator 28 gespeicherte elektrische Energie für den Betrieb eines hier nicht gezeigten elektrischen Anlassers des Verbrennungsmotors 10 genutzt werden.

### BEZUGSZEICHEN

- 1: Nutzfahrzeug (Sattelauflieger)
- 2: Chassis
- 3: Räder des Nutzfahrzeugs 1
- 4: Kofferaufbau des Nutzfahrzeugs 1
- 5: Längswände des Nutzfahrzeugs 1
- 6: Stirnwand des Nutzfahrzeugs 1
- 7: Rückwand des Nutzfahrzeugs 1
- 8: Dach des Nutzfahrzeugs 1
- 9: Transportkältemaschine
- 10: Verbrennungsmotor der Transportkältemaschine 9
- 11: Generator der Transportkältemaschine 9
- 12: elektrischer Antriebsmotor der Transportkältemaschine 9
- 13: Kompressor der Transportkältemaschine 9
- 14: Wärmetauscher der Transportkältemaschine 9
- 15: Tank der Transportkältemaschine 9
- 16: Verbindungsleitung
- 17: Zuführleitung
- 18: Rückführleitung
- 19: zwischen dem Tank 15 und der Transportkältemaschine 9 zu überbrückender Streckenabschnitt (Teilstück, über das die Zuführleitung 17 in der Rückführleitung 18 geführt ist)
- 20: Isolierschicht
- 21: Heizelement (selbstlimitierendes Heizband)
- 22: Gehäuse der Transportkältemaschine 9
- 23: Einspritzpumpe des Verbrennungsmotors 10
- 24: warmer Bereich der Transportkältemaschine 9
- 25: Abgasanlage
- 26: Heizschlange
- 27: Steuereinrichtung
- 28: elektrischer Akkumulator
- 29: Ladegerät

- R: zurückgeführter Brennstoffstrom
- U: Umgebung der Transportkältemaschine 9
- Z: zugeführter Brennstoffstrom

## Patentansprüche

1. Vorrichtung zur Brennstoffversorgung eines Verbrennungsmotors (10), umfassend einen Tank (15), der zur Aufnahme eines flüssigen Brennstoffs bestimmt ist, eine zum Verbrennungsmotor (10) führende Zuführleitung (17), über die Brennstoff zum Verbrennungsmotor (10) gelangt, und eine vom Verbrennungsmotor (10) zurück zum Tank (15) führende Rückführleitung (18), über die überschüssiger Brennstoff vom Verbrennungsmotor (10) zurück zum Tank fließt, **dadurch gekennzeichnet, dass** die Zuführleitung (17) und die Rückführleitung (18) über den gesamten Weg zwischen Verbrennungsmotor und Tank so thermisch leitend miteinander verkoppelt sind, dass über die gesamte Strecke ein Wärmeaustausch stattfinden kann.

2. Vorrichtung nach Anspruch 1, **dadurch gekennzeichnet, dass** die Zuführleitung (17) zumindest über ein Teilstück (19) ihrer Länge in der Rückführleitung (18) geführt ist.

3. Vorrichtung nach Anspruch 2, **dadurch gekennzeichnet, dass** die Zuführleitung (17) und die Rückführleitung (18) über das Teilstück (19) koaxial zueinander ausgerichtet sind.

4. Vorrichtung nach einem der voranstehenden Ansprüche, **dadurch gekenntzeichnet, dass** sie eine Heizeinrichtung umfasst, die den in der Zuführleitung (17) strömenden Brennstoff erwärmt.

5. Vorrichtung nach Anspruch 4, **dadurch gekennzeichnet, dass** die Heizeinrichtung den im Tank (15) enthaltenen Brennstoff erwärmt.

6. Vorrichtung nach einem der Ansprüche 4 oder 5, **dadurch gekennzeichnet, dass** die Heizeinrichtung ein Heizelement (21) umfasst, das in oder entlang der Zuführleitung (17) geführt ist.

7. Vorrichtung nach einem der Ansprüche 4 - 6, **dadurch gekennzeichnet, dass** die Heizeinrichtung mit einem Akkumulator (28) zur Versorgung mit elektrischer Energie verkoppelt ist.

8. Vorrichtung nach Anspruch 7, **dadurch gekennzeichnet, dass** der Akkumulator (28) mit einem von dem Verbrennungsmotor (10) angetriebenen Generator (11) verkoppelt ist, der den Akkumulator (28) bei Bedarf auflädt.

9. Vorrichtung nach Anspruch 7 oder 8, **dadurch gekennzeichnet, dass** der Akkumulator (28) mit einem zum Starten des Verbrennungsmotors (10) vorgesehenen Anlasser verkoppelt ist.

10. Transportkältemaschine, umfassend einen zum Antrieb der Aggregate (11-14) der Transportkältemaschine (9) vorgesehenen Verbrennungsmotor (10) und eine gemäß einem der voranstehenden Ansprüche ausgebildete Vorrichtung zur Versorgung des Verbrennungsmotors (10) mit Brennstoff.

11. Transportkältemaschine nach Anspruch 10, **dadurch gekennzeichnet, dass** die Rückführleitung (18) der Vorrichtung zur Versorgung des Verbrennungsmotors (10) mit Brennstoff durch einen Bereich (24) der Transportkältemaschine (9) geführt ist, die durch Abwärme der Aggregate (11-14) oder des Verbrennungsmotors (10) der Transportkältemaschine (9) besonders erwärmt ist.

12. Transportkältemaschine nach einem der Ansprüche 10 oder 11, **dadurch gekennzeichnet, dass** sie einen von dem Verbrennungsmotor (10) angetriebenen Generator (11), einen von dem Generator (11) angetriebenen elektrischen Antriebsmotor (12), einen von dem Antriebsmotor (12) angetriebenen Kompressor (13) und einen über den Kompressor (13) versorgten Wärmetauscher (14) umfasst.

## Claims

1. Device for supplying fuel to a combustion engine (10), comprising a tank (15) which is provided to receive a liquid fuel, a supply line (17) leading to the combustion engine (10), through which line fuel reaches the combustion engine (10) and a return line (18) leading from the combustion engine (10) back to the tank (15), through which line surplus fuel flows from the combustion engine (10) back to the tank, **characterised in that** the supply line (17) and the return line (18) are coupled to one another in a thermally conductive manner over the entire path between the combustion engine and the tank in such a way that a heat exchange can take place over the entire stretch thereof.

2. Device according to claim 1, **characterised in that** the supply line (17) is guided in the return line (18) over at least one portion (19) of the length thereof.

3. Device according to claim 2, **characterised in that** the supply line (17) and the return line (18) are oriented coaxially with one another over the portion (19).

4. Device according to any of the preceding claims, **characterised in that** said device comprises a heating device which heats the fuel flowing in the supply line (17).

5. Device according to claim 4, **characterised in that** the heating device heats the fuel contained in the tank (15).

6. Device according to either claim 4 or claim 5, **characterised in that** the heating device comprises a heating element (21) which is guided in or along the supply line (17).

7. Device according to any of claims 4 to 6, **characterised in that** the heating device is coupled to a accumulator (28) for supplying electrical energy thereto.

8. Device according to claim 7, **characterised in that** the accumulator (28) is coupled to a generator (11) which is powered by the combustion engine (10) and charges the accumulator (28) as required.

9. Device according to either claim 7 or claim 8, **characterised in that** the accumulator (28) is coupled to a starter motor which is provided for starting the combustion engine (10).

10. Transport refrigeration unit, comprising a combustion engine (10) which is provided for powering the units (11-14) of the transport refrigeration unit (9) and a device which is designed according to any of the preceding claims, for providing the combustion engine (10) with fuel.

11. Transport refrigeration unit according to claim 10, **characterised in that** the return line (18) of the device for supplying the combustion engine (10) with fuel is guided through a region (24) of the transport refrigeration unit (9) which is specially heated by waste heat from the units (11-14) or from the combustion engine (10) of the transport refrigeration unit (9).

12. Transport refrigeration unit according to either claim 10 or claim 11, **characterised in that** said unit comprises a generator (11) which is powered by the combustion engine (10), an electric drive motor (12) which is powered by the generator (11), a compressor (13) which is powered by the drive motor (12) and a heat exchanger (14) which is supplied via the compressor (13).

## Revendications

1. Dispositif d'alimentation en carburant d'un moteur à combustion (10), comportant un réservoir (15) qui est destiné à contenir un carburant liquide, une conduite d'amenée (17) menant au moteur à combustion (10), par laquelle le carburant arrive au moteur à combustion (10), et une conduite de retour (18) partant du moteur à combustion (10) et retournant au réservoir (15), par laquelle le carburant en excès s'écoule du moteur à combustion (10) au réservoir, **caractérisé en ce que** la conduite d'amenée (17) et la conduite de retour (18) sont accouplées l'une à l'autre sur le plan de la conduction thermique, sur la totalité du trajet entre le moteur à combustion et le réservoir, de façon qu'un échange de chaleur puisse avoir lieu sur toute la longueur dudit trajet.

2. Dispositif selon la revendication 1, **caractérisé en ce que** la conduite d'amenée (17) est placée, au moins sur une portion (19) de sa longueur, à l'intérieur de la conduite de retour (18).

3. Dispositif selon la revendication 2, **caractérisé en ce que** la conduite d'amenée (17) et la conduite de retour (18) sont disposées de façon coaxiale l'une par rapport à l'autre sur ladite portion (19).

4. Dispositif selon l'une quelconque des revendications précédentes, **caractérisé en ce qu'**il comporte un dispositif chauffant qui réchauffe le carburant s'écoulant dans la conduite d'amenée (17).

5. Dispositif selon la revendication 4, **caractérisé en ce que** le dispositif chauffant réchauffe le carburant contenu dans le réservoir (15).

6. Dispositif selon l'une quelconque des revendications 4 ou 5, **caractérisé en ce que** le dispositif chauffant comporte un élément chauffant (21), placé à l'intérieur de la conduite d'amenée (17) ou le long de celle-ci.

7. Dispositif selon l'une quelconque des revendications 4 à 6, **caractérisé en ce que** le dispositif chauffant est accouplé à un accumulateur (28) pour l'alimentation en énergie électrique.

8. Dispositif selon la revendication 7, **caractérisé en ce que** l'accumulateur (28) est accouplé à un générateur (11), entraîné par le moteur à combustion (10), qui recharge l'accumulateur (28) au besoin.

9. Dispositif selon la revendication 7 ou 8, **caractérisé en ce que** l'accumulateur (28) est accouplé à un démarreur prévu pour le démarrage du moteur à combustion (10).

10. Machine frigorifique de transport, comportant un moteur à combustion (10) prévu pour l'entraînement du groupe moteur (11-14) de la machine frigorifique de transport (9), ainsi qu'un dispositif d'alimentation en carburant du moteur à combustion (10), réalisé conformément à l'une quelconque des revendications précédentes.

11. Machine frigorifique de transport selon la revendication 10, **caractérisée en ce que** la conduite de retour (18) du dispositif d'alimentation en carburant du moteur à combustion (10), placée, sur une portion (24) de son trajet, dans la machine frigorifique de transport (9), est réchauffée, dans un mode particulier, par la chaleur dégagée par le groupe moteur (11-14) ou par le moteur à combustion (10) de la machine frigorifique de transport (9).

12. Machine frigorifique de transport selon l'une des revendications 10 ou 11, **caractérisée en ce qu'**elle comporte un générateur (11) entraîné par le moteur à combustion (10), un moteur d'entraînement électrique (12) entraîné par le générateur (11), un compresseur (13) entraîné par le moteur d'entraînement (12) et un échangeur de chaleur (14) alimenté par le compresseur (13).
